# EUROPEAN PATENT SPECIFICATION

(11) **EP 3 353 242 B1**
(45) Date of publication and mention of the grant of the patent: **13.11.2019**
(21) Application number: 16774546.2
(22) Date of filing: 19.09.2016
(51) Int. Cl.: C08L 69/00, C08G 77/448

(54) **FLAME RETARDANT POLYCARBONATE COMPOSITION, A METHOD OF MAKING AND OF USING THE SAME**
FLAMMHEMMENDE POLYCARBONATZUSAMMENSETZUNG, VERFAHREN ZUR HERSTELLUNG UND VERWENDUNG DAVON
COMPOSITION IGNIFUGE À BASE DE POLYCARBONATE, SON PROCÉDÉ DE PRÉPARATION ET D'UTILISATION

(30) Priority: 21.09.2015 US 201562221426 P
(43) Date of publication of application: 01.08.2018
(73) Proprietor: SABIC Global Technologies B.V., 4612 PX Bergen op Zoom (NL)
(72) Inventor: CHEN, Lin, Shanghai 201319 (CN); WEI, Zhenke, Shanghai 201319 (CN); ZHENG,Yun, Shanghai 201319 (CN); SHI, Hongtao, Shanghai 201319 (CN)
(74) Representative: Modiano, Micaela Nadia
(86) International application number: PCT/IB2016/055584
(87) International publication number: WO 2017/051305

(56) References cited:
- WO-A1-2015/092559
- US-A1- 2007 049 706
- US-A1- 2014 371 360

## Description

### BACKGROUND

This disclosure relates to a flame retardant polycarbonate composition, methods of manufacture, and uses thereof.

Polycarbonates are useful in the manufacture of articles and components for a wide range of applications due to their good heat resistance and transparency. Because of their broad use, particularly in consumer electronic markets, such as in computer and television (TV) applications, it is desirable to provide polycarbonates with halogen free flame retardancy, good flowability, and mechanical strength. However, as the consumer electronics industry increasingly desires lighter and thinner materials, polycarbonate blends with conventional halogen free additives, such as organic phosphate, are increasingly unable to meet demands for materials having thinner flame retardancy ratings and higher flow without significant sacrifices in material mechanical strength. Document US 2007/049706 A1 is directed to polycarbonate resin compositions that include impact modifiers but that do not produce excessive smoke upon being burned and that exhibit good processability and good mechanical properties. The examples 6, 7, 12, 17, 19 and 20 disclose compositions comprising polycarbonate, a polycarbonat-polysiloxane block-copolymer, an impact modifier and 5wt%, 7,5wt% or 12wt% of BPADP as a flame retardant.

There accordingly remains a need in the art for polycarbonate compositions that have excellent flame retardancy, good flowability, and improved impact strength.

### BRIEF SUMMARY

Disclosed herein is a polycarbonate composition, a method of making, and of using the same.

In an embodiment, a composition comprises, based on the total weight of the composition, 55 to 85 wt% of a polycarbonate; 10 to 25 wt% of an organopolysiloxane-polycarbonate block copolymer; 5 to 15 wt% of a phosphine oxide; and 0 to 3 wt % of an impact modifier.

In another embodiment, a method of making a composition comprises extruding a mixture to form a composition comprising, based on the total weight of the composition, 55 to 85 wt% of a polycarbonate; 10 to 25 wt% of an organopolysiloxane-polycarbonate block copolymer; 5 to 15 wt% of a phosphine oxide; and 0 to 3 wt % of an impact modifier comprises extruding the polycarbonate, the organopolysiloxane-polycarbonate block copolymer, and the phosphine oxide.

The above described and other features are exemplified by the following detailed description.

### DETAILED DESCRIPTION

Polycarbonate (PC) compositions are widely used as engineering plastic in various industries due to their good heat resistance and transparency. The self-charring capability during combustion and the excellent ductility makes polycarbonate especially suitable for the consumer electronics industry. However, the consumer electronics industry increasingly demands lighter and thinner designs that are capable of achieving their desired flame ratings and often requests that the articles are halogen-free. With this lighter and thinner design trend, improved polycarbonate compositions are needed as traditional halogen-free flame retardants, such as organic phosphate, are less capable of meeting current customer demands. For example, in applications requiring a thin wall design, such as computer and TV applications, improved flame retardant ratings of thinner sample sizes are desired, for example, of achieving a UL94 V0 rating at 0.6 mm or thinner. Common phosphate flame retardant additives, such as resorcinol bis-(diphenyl phosphate) (RDP) and Bisphenol A Bis-(diphenyl phosphate) (BPADP) are not capable of meeting thin wall FR requirements, for example, a thickness of less than or equal to 0.6 mm while maintaining one or both of good heat resistance and impact strength values due to plasticization. There accordingly remains a need for a thin wall flame retardant polycarbonate composition with excellent flame retardant ratings at thickness values of less than or equal to 0.6 mm. It would further be beneficial if the composition was a halogen-free composition. It would be even further beneficial if the composition could achieve a high flowability without any sacrifice in material mechanical strength.

This disclosure is directed towards a polycarbonate composition having excellent flame retardant (FR) performance, such that they can be used in thin wall applications. The improved flame retardancy is achieved by a polycarbonate composition comprising a polycarbonate in an amount of 55 to 85 weight percent (wt%), a organopolysiloxane-polycarbonate block copolymer in an amount of 10 to 25 wt%, an oxide phosphine flame retardant in an amount of 5 to 15 wt%, and optionally an impact modifier in an amount of 0 to 3 wt%, based on the total weight of the composition. The polycarbonate composition can have a UL94 V0 rating at a thickness at less than or equal to 0.6 millimeters (mm), specifically, at less than or equal to 0.5 mm. The polycarbonate composition can further be halogen-free. As used herein, the term "halogen-free" refers to the composition having a chlorine and/or bromine content of less than or equal to 100 parts per million by weight (ppm), less than or equal to 75 ppm, or less than or equal to 50 ppm, based on the total parts by weight of the composition, excluding any filler.

The flame retardant composition having excellent thin wall FR ratings can further display one or both of improved impact strength and good flowability. For example, the polycarbonate composition can have one or both of a Notched Izod impact strength of greater than or equal to 500 Joules per meter (J/m) when measured at less than or equal to 23 degrees Celsius (°C) using 1/8-inch thick bars (3.2 mm) in accordance with ASTM D256-10 and a melt flow rate (MFR) of greater than or equal to 10 grams per 10 minute (g/10 min) at a temperature of 260°C as determined by ASTM D1238-13 at 2.16 kilogram (kg).

As used herein, the term "polycarbonate" refers to a polymer having repeating structural carbonate units of formula (1) 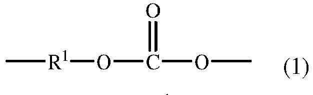 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 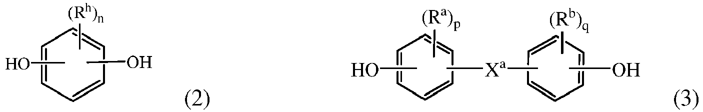 In formula (2), each R^{h} is independently a C₁₋₁₀ hydrocarbyl group such as a C₁₋₁₀ alkyl, or a C₆₋₁₀ aryl, and n is 0 to 4.

In formula (3), R^{a} and R^{b} are each independently C₁₋₁₂ alkoxy, or C₁₋₁₂ alkyl; and p and q are each independently integers of 0 to 4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically, methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically, para) to each other on the C₆ arylene group, for example, a single bond, -O-, -S-, -S(O)-, - S(O)₂-, -C(O)-, or a C₁₋₁₈ organic group, which can be cyclic or acyclic, aromatic or non-aromatic, and can further comprise heteroatoms such as oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl) diphenylmethane, bis(4-hydroxyphenyl)-1-naphthylmethane, 1,2-bis(4-hydroxyphenyl) ethane, 1,1-bis(4-hydroxyphenyl)-1-phenylethane, 2-(4-hydroxyphenyl)-2-(3-hydroxyphenyl) propane, bis(4-hydroxyphenyl)phenylmethane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, or the like.

Specific dihydroxy compounds include resorcinol, 2,2-bis(4-hydroxyphenyl) propane ("bisphenol A" or "BPA", in which in which each of A¹ and A² is p-phenylene and Y¹ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

The polycarbonate can have an intrinsic viscosity, as determined in chloroform at 25°C, of 0.3 to 1.5 deciliters per gram (dl/gm), specifically, 0.45 to 1.0 dl/gm. The polycarbonate can have a weight average molecular weight (Mw) of 10,000 to 200,000 Daltons, or 20,000 to 100,000 Daltons, or 10,000 to 50,000 Daltons, as measured by gel permeation chromatography (GPC), using a crosslinked styrene-divinylbenzene column and calibrated to polycarbonate references. GPC samples are prepared at a concentration of 1 milligram per milliliter, and are eluted at a flow rate of 1.5 milliliter per minute.

The polycarbonate can comprise at least a first polycarbonate and a second polycarbonate. The first polycarbonate can have a first melt flow rate of less than 15 g/10 min, specifically, less than or equal to 10 g/10 min as determined in accordance with ASTM D1238-13 at 300°C and a 1.2 kg load. The second polycarbonate can have a second melt flow rate of greater than or equal to 15 g/10 min, specifically, greater than or equal to 20 g/10 min as determined in accordance with ASTM D1238-13 at 300°C and a 1.2 kg load. The first polycarbonate can be present in an amount of 5 to 65 wt%, more specifically, 15 to 30 wt%, more specifically, 20 to 30 wt% based on the total weight of the composition. The second polycarbonate can be present in an amount of 35 to 85 wt%, more specifically, 40 to 80 wt%, more specifically, 40 to 60 wt% based on the total weight of the composition.

The polycarbonate can be present in an amount of 55 to 85 wt%, specifically, 70 to 85 wt% based on the total weight of the composition.

Polycarbonates can be manufactured by interfacial polymerization, melt polymerization, and the like. Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as, for example, a tertiary amine or a phase transfer catalyst, under controlled pH conditions, e.g., 8 to 10. The most commonly used water immiscible solvents include methylene chloride, 1,2-dichloroethane, chlorobenzene, toluene, and the like.

Exemplary carbonate precursors include a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among tertiary amines that can be used are aliphatic tertiary amines such as triethylamine, tributylamine, cycloaliphatic amines such as N,N-diethyl-cyclohexylamine and aromatic tertiary amines such as N,N-dimethylaniline.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be 0.1 to 10 wt% based on the weight of bisphenol in the phosgenation mixture. In another embodiment, an effective amount of phase transfer catalyst can be 0.5 to 2 wt% based on the weight of bisphenol in the phosgenation mixture.

All types of polycarbonate end groups are contemplated as being useful in the polycarbonate composition, provided that such end groups do not significantly adversely affect desired properties of the composition. The polycarbonate can comprise a para-cumylphenol end-capped polycarbonate, for example, a para-cumylphenol end-capped, bisphenol A polycarbonate.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), trimesic acid, and benzophenone tetracarboxylic acid. The branching agents can be added at a level of 0.05 to 2.0 wt%. Mixtures comprising linear and branched polycarbonates can be used.

A chain stopper (also referred to as a capping agent) can be included during polymerization. The chain stopper limits molecular weight growth rate, and so controls molecular weight in the polycarbonate. Exemplary chain stoppers include certain mono-phenolic compounds. Mono-phenolic chain stoppers are exemplified by monocyclic phenols such as phenol and C₁-C₂₂ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atoms can be specifically mentioned. Certain mono-phenolic UV absorbers can also be used as a capping agent, for example, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Alternatively, melt processes can be used to make the polycarbonates. Generally, in the melt polymerization process, polycarbonates are prepared by co-reacting, in a molten state, the dihydroxy reactant(s) (i.e., aliphatic diol and/or aliphatic diacid, and any additional dihydroxy compound) and a diaryl carbonate ester, such as diphenyl carbonate, or an activated carbonate such as bis(methyl salicyl) carbonate, in the presence of a transesterification catalyst. The reaction may be carried out in typical polymerization equipment, such as one or more continuously stirred reactors (CSTR's), plug flow reactors, wire wetting fall polymerizers, free fall polymerizers, wiped film polymerizers, BANBURY® mixers, single or twin screw extruders, or combinations of the foregoing. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing.

A transesterification catalyst(s) can be employed in the melt polymerization. The transeseterification catalyst can comprise one or both of an alkali catalyst and a quaternary catalyst. The quaternary catalyst comprises one or both of a quaternary ammonium compound and a quaternary phosphonium compound. The alkali catalyst comprises a source of one or both of an alkali ion and an alkaline earth metal ion. The quaternary ammonium compound can be a compound of the structure (R⁴)₄N⁺X⁻, wherein each R⁴ is the same or different, and is a C₁₋₂₀ alkyl, a C₄₋₂₀ cycloalkyl, or a C₄₋₂₀ aryl; and X⁻ is an organic or inorganic anion, for example, a hydroxide, halide, carboxylate, sulfonate, sulfate, formate, carbonate, or bicarbonate. The quaternary phosphonium compound can be a compound of the structure (R⁵)₄P⁺X⁻, wherein each R⁵ is the same or different, and is a C₁₋₂₀ alkyl, a C₄₋₂₀ cycloalkyl, or a C₄₋₂₀ aryl; and X⁻ is an organic or inorganic anion, for example, a hydroxide, phenoxide, halide, carboxylate such as acetate or formate, sulfonate, sulfate, formate, carbonate, or bicarbonate. Where X⁻ is a polyvalent anion such as carbonate or sulfate, it is understood that the positive and negative charges in the quaternary ammonium and phosphonium structures are properly balanced. The alkali catalyst comprises a source of one or both of alkali ions and alkaline earth ions, for example, alkaline earth hydroxides, alkali metal hydroxides, salts of carboxylic acids, and derivatives of ethylene diamine tetraacetic acid. The melt polymerization can comprise quenching of the transesterification catalysts and any reactive catalyst residues with an acidic compound, such as n-butyl tosylate, after polymerization. The melt polymerization can comprise removal of catalyst residues and/or quenching agent and other volatile residues from the melt polymerization reaction after polymerization is completed.

The composition further comprises an organopolysiloxane-polycarbonate block copolymer(s), also referred to herein as a poly(siloxane-carbonate) copolymer, and also commonly referred to as a polysiloxane-polycarbonate or a polydiorganosiloxane-carbonate.

The polydiorganosiloxane (also referred to herein as "polysiloxane") blocks comprise repeating diorganosiloxane units as in formula (10) 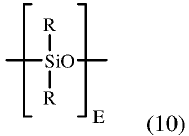 wherein each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. Combinations of the foregoing R groups can be used in the same copolymer.

The value of E in formula (10) can vary widely depending on the type and relative amount of each component in the polycarbonate composition, the desired properties of the composition, and like considerations. Generally, E has an average value of 2 to 1,000, specifically, 2 to 500, 2 to 200, or 2 to 125, 5 to 80, or 10 to 70. In an embodiment, E has an average value of 10 to 80 or 10 to 40, and in still another embodiment, E has an average value of 40 to 80, or 40 to 70. Where E is of a lower value, e.g., less than 40, it can be desirable to use a relatively larger amount of the polycarbonate-polysiloxane copolymer. Conversely, where E is of a higher value, e.g., greater than 40, a relatively lower amount of the polycarbonate-polysiloxane copolymer can be used.

A combination of a first and a second (or more) organopolysiloxane-polycarbonate block copolymer can be used, wherein the average value of E of the first copolymer is less than the average value of E of the second copolymer.

In an embodiment, the polydiorganosiloxane blocks are of formula (11) 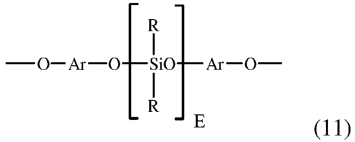 wherein E is as defined above; each R can be the same or different, and is as defined above; and Ar can be the same or different, and is a substituted or unsubstituted C₆-C₃₀ arylene, wherein the bonds are directly connected to an aromatic moiety. Ar groups in formula (11) can be derived from a C₆-C₃₀ dihydroxyarylene compound, for example, a dihydroxyarylene compound of formula (3) or (6) above. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polydiorganosiloxane blocks are of formula (13) 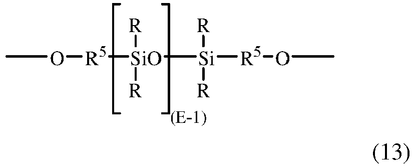 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polydiorganosiloxane blocks are of formula (14): 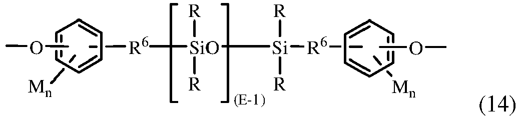 wherein R and E are as defined above. R⁶ in formula (14) is a divalent C₂-C₈ aliphatic. Each M in formula (14) can be the same or different, and can be cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an embodiment, M is an alkyl such as methyl, ethyl, or propyl, an alkoxy such as methoxy, ethoxy, or propoxy, or an aryl such as phenyl or tolyl; R⁶ is a dimethylene, trimethylene or tetramethylene; and R is a C₁₋₈ alkyl, fluoroalkyl such as trifluoropropyl, cyanoalkyl, or aryl such as phenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific polydiorganosiloxane blocks are of the formula 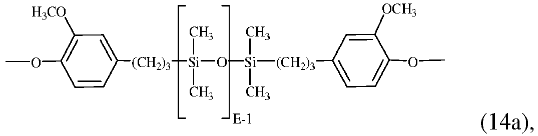 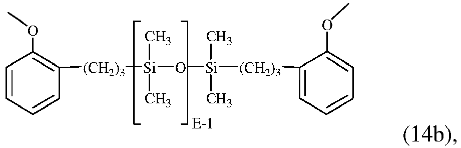 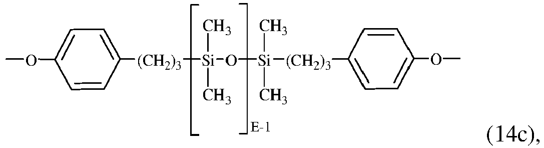 or a combination comprising at least one of the foregoing, wherein E has an average value of 2 to 200, 2 to 125, 5 to 125, 5 to 100, 5 to 50, 20 to 80, or 5 to 20.

The organopolysiloxane-polycarbonate block copolymers can comprise carbonate units (1) derived from bisphenol A, and repeating siloxane units (14a), (14b), (14c), or a combination comprising at least one of the foregoing (specifically, of formula 14a), wherein E has an average value of 4 to 50, 4 to 15, specifically, 5 to 15, more specifically, 6 to 15, and still more specifically, 7 to 10. Such organopolysiloxane-polycarbonate block copolymers can be transparent. The transparent copolymers can be manufactured using one or both of the tube reactor processes described in U.S. Patent No. 6,833,422 or the process described in U.S. Patent No. 6,723,864 can be used to synthesize the organopolysiloxane-polycarbonate block copolymers.

Blocks of formula (14) can be derived from the corresponding dihydroxy polydiorganosiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. The organopolysiloxane-polycarbonate block copolymer can then be manufactured, for example, by the synthetic procedure of European Patent Application Publication No. 0 524 731 A1 of Hoover, page 5, Preparation 2.

The organopolysiloxane-polycarbonate block copolymer can comprise 50 to 99 wt% of carbonate units and 1 to 50 wt% siloxane units. Within this range, the organopolysiloxane-polycarbonate block copolymer can comprise 70 to 98 wt%, more specifically, 75 to 97 wt% of carbonate units and 2 to 30 wt%, more specifically, 3 to 25 wt% siloxane units.

The organopolysiloxane-polycarbonate block copolymer can comprise a poly(bisphenol A carbonate)-polydimethylsiloxane block copolymer. The poly(bisphenol A carbonate)-polydimethylsiloxane block copolymer can have a polydimethylsiloxane content of 15 to 20 wt% based on the total weight of the copolymer.

The organopolysiloxane-polycarbonate block copolymer can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The organopolysiloxane-polycarbonate block copolymer can have a melt volume flow rate, measured at 300°C/1.2 kg, of 1 to 50 cubic centimeters per 10 minutes (cc/10 min), specifically, 2 to 30 cc/10 min as determined by ASTM D1238-13 at 2.16 kilogram (kg). Mixtures of organopolysiloxane-polycarbonate block copolymers of different flow properties can be used to achieve the overall desired flow property.

The organopolysiloxane-polycarbonate block copolymer can be present in an amount of 10 to 25 wt%, more specifically, 10 to 20 wt%, or more specifically, 12 to 20 wt%, more specifically, 15 to 20 wt% based on the total weight of the polycarbonate composition.

The polycarbonate composition comprises flame retardant comprising a phosphine oxide. The phosphine oxide, for instance, can comprise an organophosphine oxide having the formula 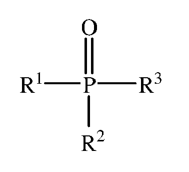 wherein R¹, R², and R³ are each independently C₄-C₂₄ hydrocarbyl. The C₄-C₂₄ hydrocarbyl can be, for example, C₄-C₂₄ alkyl, C₆-C₂₄ aryl, C₇-C₂₄ alkylaryl, or C₇-C₂₄ arylalkyl.

The organophosphine oxide can comprise triphenylphosphine oxide, tri-p-tolyl-phosphine oxide, tris(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, or a combination comprising at least one of the foregoing.

The phosphine oxide can be present in an amount of 5 to 15 wt%, more specifically, 6 to 15 wt%, or 6 to 12 wt% based on the total weight of the composition. The phosphine oxide can present in an amount of greater than 9 to 15 wt% based on the total weight of the composition. The phosphine oxide can be present in an amount of 9 to 15 wt% based on the total weight of the composition and the composition can comprise the impact modifier.

The polycarbonate composition can further include an impact modifier(s). The impact modifier can include an elastomer-modified graft copolymer comprising (i) an elastomeric (i.e., rubbery) polymer substrate having a glass transition temperature (Tg) less than or equal to 10°C, more specifically, less than or equal to -10°C, or more specifically, -40 to -80°C, and (ii) a rigid polymeric superstrate grafted to the elastomeric polymer substrate. As is known, elastomer-modified graft copolymers can be prepared by first providing the elastomeric polymer, then polymerizing the constituent monomer(s) of the rigid phase in the presence of the elastomer to obtain the graft copolymer. The grafts can be attached as graft branches or as shells to an elastomer core. The shell can merely physically encapsulate the core, or the shell can be partially or essentially completely grafted to the core.

Materials for use as the elastomer phase include, for example, conjugated diene rubbers; copolymers of a conjugated diene with less than or equal to 50 wt% of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers.

Conjugated diene monomers for preparing the elastomer phase include those of formula (17) 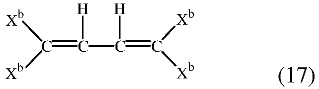 wherein each X^{b} is independently hydrogen, C₁-C₅ alkyl, or the like. Examples of conjugated diene monomers that can be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as combinations comprising at least one of the foregoing conjugated diene monomers. Specific conjugated diene homopolymers include polybutadiene and polyisoprene.

Copolymers of a conjugated diene rubber can also be used, for example, those produced by aqueous radical emulsion polymerization of a conjugated diene and at least one monomer copolymerizable therewith. Monomers that are useful for copolymerization with the conjugated diene include monovinylaromatic monomers containing condensed aromatic ring structures, such as vinyl naphthalene, vinyl anthracene, and the like, or monomers of formula (18) 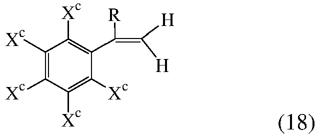 wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkylaryl, C₁-C₁₂ alkoxy, C₃-C₁₂ cycloalkoxy, C₆-C₁₂ aryloxy, or hydroxy, and R is hydrogen or C₁-C₅ alkyl. Exemplary monovinylaromatic monomers that can be used include styrene, 3-methylstyrene, 3,5-diethylstyrene, 4-n-propylstyrene, alpha-methylstyrene, alpha-methyl vinyltoluene, and the like, and combinations comprising at least one of the foregoing compounds. Styrene and/or alpha-methylstyrene can be used as monomers copolymerizable with the conjugated diene monomer.

Other monomers that can be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (19) 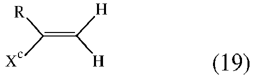 wherein R is hydrogen or C₁-C₅ alkyl, and X^{c} is cyano, C₁-C₁₂ alkoxycarbonyl, C₁-C₁₂ aryloxycarbonyl, hydroxy carbonyl, or the like. Examples of monomers of formula (19) include acrylonitrile, methacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers can also be used.

(Meth)acrylate monomers for use in the elastomeric phase can be crosslinked, particulate emulsion homopolymers or copolymers of C₁₋₈ alkyl (meth)acrylates, in particular C₄₋₆ alkyl acrylates, for example, n-butyl acrylate, t-butyl acrylate, n-propyl acrylate, isopropyl acrylate, 2-ethylhexyl acrylate, and the like, and combinations comprising at least one of the foregoing monomers. The C₁₋₈ alkyl (meth)acrylate monomers can optionally be polymerized in admixture with less than or equal to 15 wt% of comonomers of formulas (17), (18), or (19), based on the total monomer weight. Exemplary comonomers include but are not limited to butadiene, isoprene, styrene, methyl methacrylate, phenyl methacrylate, phenethylmethacrylate, N-cyclohexylacrylamide, vinyl methyl ether or acrylonitrile, and combinations comprising at least one of the foregoing comonomers. Optionally, less than or equal to 5 wt% of a polyfunctional crosslinking comonomer can be present, based on the total monomer weight. Such polyfunctional crosslinking comonomers can include, for example, divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase can be polymerized by mass, emulsion, suspension, solution or combined processes such as bulk-suspension, emulsion-bulk, bulk-solution or other techniques, using continuous, semi-batch, or batch processes. The particle size of the elastomer substrate is not critical. For example, an average particle size of 0.001 to 25 micrometers, specifically, 0.01 to 15 micrometers, or even more specifically, 0.1 to 8 micrometers can be used for emulsion based polymerized rubber lattices. A particle size of 0.5 to 10 micrometers, specifically, 0.6 to 1.5 micrometers can be used for bulk polymerized rubber substrates. Particle size can be measured by simple light transmission methods or capillary hydrodynamic chromatography (CHDF). The elastomer phase can be a particulate, moderately crosslinked conjugated butadiene or C₄₋₆ alkyl acrylate rubber, and specifically has a gel content greater than 70%. Also useful are combinations of butadiene with styrene and/or C₄₋₆ alkyl acrylate rubbers.

The elastomeric phase can comprise 5 to 95 wt% of the total graft copolymer, more specifically, 20 to 90 wt%, and even more specifically, 40 to 85 wt% of the elastomer-modified graft copolymer, the remainder being the rigid graft phase.

The rigid phase of the elastomer-modified graft copolymer can be formed by graft polymerization of a combination comprising a monovinylaromatic monomer and optionally at least one comonomer in the presence of at least one elastomeric polymer substrates. The above-described monovinylaromatic monomers of formula (18) can be used in the rigid graft phase, including styrene, alpha-methyl styrene, vinyltoluene, vinylxylene, butylstyrene, para-hydroxystyrene, methoxystyrene, or the like, or combinations comprising at least one of the foregoing monovinylaromatic monomers. Useful comonomers include, for example, the above-described monovinylic monomers and/or monomers of the general formula (17). In an embodiment, R is hydrogen or C₁-C₂ alkyl, and X^{c} is cyano or C₁-C₁₂ alkoxycarbonyl. Exemplary comonomers for use in the rigid phase include acrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase can vary widely depending on the type of elastomer substrate, type of monovinylaromatic monomer(s), type of comonomer(s), and the desired properties of the impact modifier. The rigid phase can comprise less than or equal to 100 wt% of monovinyl aromatic monomer, specifically, 30 to 100 wt%, more specifically, 50 to 90 wt% monovinylaromatic monomer, with the balance of the rigid phase being comonomer(s).

Depending on the amount of elastomer-modified polymer present, a separate matrix or continuous phase of ungrafted rigid polymer or copolymer can be simultaneously obtained along with the elastomer-modified graft copolymer. The impact modifier can comprise 40 to 95 wt% elastomer-modified graft copolymer and 5 to 65 wt% graft copolymer, based on the total weight of the impact modifier. In another embodiment, such impact modifiers comprise 50 to 85 wt%, more specifically, 75 to 85 wt% rubber-modified graft copolymer, together with 15 to 50 wt%, more specifically, 15 to 25 wt% graft copolymer, based on the total weight of the impact modifier.

In an embodiment, the aromatic vinyl copolymer comprises "free" styrene-acrylonitrile copolymer (SAN), i.e., styrene-acrylonitrile copolymer that is not grafted onto another polymeric chain. In a particular embodiment, the free styrene-acrylonitrile copolymer can have a molecular weight of 50,000 to 200,000 Daltons on a polystyrene standard molecular weight scale and can comprise various proportions of styrene to acrylonitrile. For example, free SAN can comprise 75 weight percent styrene and 25 weight percent acrylonitrile based on the total weight of the free SAN copolymer. Free SAN can optionally be present by virtue of the addition of a grafted rubber impact modifier in the composition that contains free SAN, and/or free SAN can by present independent of other impact modifiers in the composition.

Another specific type of elastomer-modified impact modifier comprises structural units derived from at least one silicone rubber monomer, a branched acrylate rubber monomer having the formula H₂C=C(R^{d})C(O)OCH₂CH₂R^{e}, wherein R^{d} is hydrogen or a C₁-C₈ linear or branched alkyl group and R^{e} is a branched C₃-C₁₆ alkyl group; a first graft link monomer; a polymerizable alkenyl-containing organic material; and a second graft link monomer. The silicone rubber monomer can comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethyl cyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane, octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, or a combination comprising at least one of the foregoing. The polymerizable alkenyl-containing organic material can be, for example, a monomer of formula (18) or (19), e.g., styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The first graft link monomer can be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy)methylsilane and/or (3-mercaptopropyl)trimethoxysilane. The second graft link monomer can be a polyethylenically unsaturated compound having at least one allyl group, such as allyl methacrylate, triallyl cyanurate, triallyl isocyanurate, and the like, or a combination comprising at least one of the foregoing.

The silicone-acrylate impact modifiers can be prepared by emulsion polymerization, wherein, for example, a silicone rubber monomer is reacted with a first graft link monomer at a temperature of 30 to 110°C to form a silicone rubber latex, in the presence of a surfactant such as dodecylbenzenesulfonic acid. Alternatively, a cyclic siloxane such as cyclooctamethyltetrasiloxane and a tetraethoxyorthosilicate can be reacted with a first graft link monomer such as (gamma-methacryloxypropyl)methyldimethoxysilane. A branched acrylate rubber monomer is then polymerized with the silicone rubber particles, optionally in the presence of a crosslinking monomer, such as allyl methacrylate, or in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid can be separated from the aqueous phase through coagulation (by treatment with a coagulant) and dried to a fine powder to produce the silicone-acrylate rubber impact modifier. This method can be generally used for producing the silicone-acrylate impact modifier having a particle size of 100 nanometers to 2 micrometers.

Processes known for the formation of the foregoing elastomer-modified graft copolymers include mass, emulsion, suspension, and solution processes, or combined processes such as bulk-suspension, emulsion-bulk, bulk-solution, or other techniques, using continuous, semi-batch, or batch processes.

In an embodiment, the foregoing types of impact modifiers are prepared by an emulsion polymerization process that is free of basic materials such as alkali metal salts of C₆₋₃₀ fatty acids, for example, sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and can catalyze transesterification and/or degradation of polycarbonates. Instead, ionic sulfate, sulfonate or phosphate surfactants can be used in preparing the impact modifiers, particularly the elastomeric substrate portion of the impact modifiers. Useful surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, or a combination comprising at least one of the foregoing. A specific surfactant is a C₆₋₁₆, specifically a C₈₋₁₂ alkyl sulfonate. This emulsion polymerization process is described and disclosed in various patents and literature of such companies as Rohm & Haas and General Electric Company.

A specific impact modifier of this type is a methyl methacrylate-butadienestyrene (MBS) impact modifier wherein the butadiene substrate is prepared using above-described sulfonates, sulfates, or phosphates as surfactants. Other examples of elastomer-modified graft copolymers in addition to ABS and MBS include but are not limited to acrylonitrile-styrene-butyl acrylate (ASA), methyl methacrylate-acrylonitrile-butadienestyrene (MABS), and acrylonitrile-ethylene-propylene-diene-styrene (AES).

The polycarbonate composition can comprise 0 to 3 wt%, specifically, 0.05 to 3 wt% of the impact modifier based on the total weight of the composition.

In addition to the polycarbonate, organopolysiloxane-polycarbonate block copolymer, oxide phosphine additive, and any impact modifier, the polycarbonate composition can include various additives ordinarily incorporated into polymer compositions of this type, with the proviso that the additive(s) are selected so as to not significantly adversely affect the desired properties of the polycarbonate composition, in particular thin wall FR performance and impact strength and/or flowability. Such additives can be mixed at a suitable time during the mixing of the components for forming the composition. Exemplary additives include fillers, reinforcing agents, antioxidants, heat stabilizers, light stabilizers, ultraviolet (UV) light stabilizers, plasticizers, lubricants, mold release agents, antistatic agents, colorants (such as titanium dioxide, carbon black, and organic dyes), surface effect additives, radiation stabilizers, and anti-drip agents. A combination of additives can be used, for example, a combination of an antioxidant, a mold release agent, and an anti-drip agent. In general, the additives are used in the amounts generally known to be effective. The total amount of additives (other than any impact modifier, filler, or reinforcing agents) is generally 0.01 to 5 wt%, based on the total weight of the composition.

Exemplary antioxidant additives include organophosphites such as tris(nonyl phenyl)phosphite, tris(2,4-di-t-butylphenyl)phosphite, bis(2,4-di-t-butylphenyl) pentaerythritol diphosphite, distearyl pentaerythritol diphosphite; alkylated monophenols or polyphenols; alkylated reaction products of polyphenols with dienes, such as tetrakis [methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis [3-(3,5-di-tert-butyl-4-hydroxyphenyl) propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Plasticizers, lubricants, and/or mold release agents can also be used. There is considerable overlap among these types of materials, which include phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a solvent; waxes such as beeswax, montan wax, and paraffin wax. Such materials are used in amounts of 0.1 to 1 parts by weight, based on 100 parts by weight of the total composition, excluding any filler.

Anti-drip agents can also be used in the polycarbonate composition, for example, a fibril forming or non-fibril forming fluoropolymer such as polytetrafluoroethylene (PTFE). The anti-drip agent can be encapsulated by a rigid copolymer as described above, for example, styrene-acrylonitrile copolymer (SAN). PTFE encapsulated in SAN is known as TSAN. Encapsulated fluoropolymers can be made by polymerizing the encapsulating polymer in the presence of the fluoropolymer, for example, an aqueous dispersion. TSAN can provide significant advantages over PTFE, in that TSAN can be more readily dispersed in the composition. An exemplary TSAN can comprise 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as, for example, an aromatic polycarbonate or SAN to form an agglomerated material for use as an anti-drip agent. Either method can be used to produce an encapsulated fluoropolymer. Anti-drip agents are generally used in amounts of 0 to 5 wt%, based on 100 wt% of the composition.

In an embodiment, the polycarbonate composition comprises 55 to 85 wt% of the polycarbonate; 10 to 25 wt% of an organopolysiloxane-polycarbonate block copolymer; 5 to 15 wt% of a phosphine oxide, and optionally 0 to 3 wt% of an impact modifier, each based on the total weight of the composition. The polycarbonate composition can have a UL94 V0 rating at a thickness of less than or equal to 0.6 mm, e.g., at less than 0.6 mm. The polycarbonate composition can also have one or more of an Notched Izod Impact strength of greater than or equal to 500 J/m at 23°C or a lower temperature, such as at 10°C or 0°C, and a flowability (MFR) of greater than or equal to 10 g/10 min at a temperature of 260°C.

The polycarbonate composition can be manufactured by various methods. For example, a polycarbonate, for example, as a powdered polycarbonate, the organopolysiloxane-polycarbonate block copolymer, the phosphine oxide, and/or other optional components (such as one or more of an impact modifier and a filler) can first be mixed, for example, in a HENSCHEL-Mixer™ high speed mixer to form a mixture. Other mixers and low shear processes, including but not limited to hand mixing, can be used instead of or in addition to the high speed mixer. The mixture can then be extruded. For example, the mixture can be fed into the throat of a twin-screw extruder via a hopper and the mixture can be extruded. Alternatively, at least one of the components, for example, one or more of the organopolysiloxane-polycarbonate block copolymer, the phosphine oxide, and the impact modifier can be incorporated into the mixture by feeding directly into the extruder at the throat and/or downstream through a sidestuffer. For example, additive(s) can be compounded into a masterbatch with a desired polymeric resin and fed into the extruder to form an extrudate. The extrudate can be immediately (for example, as it exits the extruder) quenched in a water batch and pelletized. The pellets, so prepared, when cutting the extrudate can be one-fourth inch long or less as desired. Such pellets can be used for subsequent molding, shaping, or forming.

The polycarbonate composition can have excellent physical properties, such as a melt flow rate (MFR) of greater than or equal to 10 g/10min, specifically, 10 to 20 g/10 min, measured at 260°C under a load of 2.16 kg in accordance with ASTM D1238-13.

The polycarbonate composition can have a Notched Izod Impact (NII) strength of greater than or equal to 500 Joules per meter, (J/m), or 500 to 1,000 J/m, or greater than or equal to 600 J/m, measured at 23°C or 0°C using 1/8-inch thick bars (3.2 mm) in accordance with ASTM D256-10.

The polycarbonate composition can have an FR rating of V0 according to UL 94 at thickness of less than or equal to 0.6 mm, e.g., at 0.6 mm, preferably at less than 0.6 mm. The polycarbonate composition can have an FR rating of V0 according to UL 94 at thickness of 0.5 mm. As used herein, flammability tests were performed following the procedure of Underwriter's Laboratory Bulletin 94 entitled "Tests for Flammability of Plastic Materials for Parts in Devices and Appliances" (ISBN 0-7629-0082-2), Sixth Edition, Dated March 28, 2013 (UL 94). Several ratings can be applied based on the rate of burning, time to extinguish, ability to resist dripping, and whether or not drips are burning.

The polycarbonate composition can have a Vicat softening temperature of 100 to 120°C. Vicat softening temperature was measured in accordance with ASTM 1525-09.

Shaped, formed, or molded articles comprising the polycarbonate composition are also provided. The polycarbonate composition can be molded into useful shaped articles by a variety of methods, such as injection molding, extrusion, rotational molding, blow molding and thermoforming. Some examples of articles include a computer (such as a desktop computer, a laptop computer, or a tablet), a monitor (such as a computer monitor), a television, a handheld electronic device (such as a cell phone, a personal digital assistant (PDA), or an mp3 player), an electrical connector, a lighting fixture, a home appliance, and the like. Specifically, the article can be a computer or a television. The article can be a battery housing.

The polycarbonate composition is further illustrated by the following nonlimiting examples.

| Table 1 | | |
|---|---|---|
| Acronym | Component | Source |
| LF PC | Low flow, para-cumylphenol end-capped, bisphenol A polycarbonate; CAS Reg. No. 11211-39-3; having an MFR of about 6 g/10 min at 300°C and 1.2 kg load; and a Mw of 30,000 Da | SABIC's Innovative Plastics business |
| HF PC | High flow, para-cumylphenol end-capped, bisphenol A polycarbonate; CAS Reg. No. 11211-39-3; having an MFR of about 25 g/10 min at 300°C and 1.2 kg load; and a Mw of 22,000 Da | SABIC's Innovative Plastics business |
| EXL | Poly(bisphenol A carbonate)-polydimethylsiloxane block copolymer, having a polydimethylsiloxane content of about 20 wt%, an average of about 45 siloxane repeat units per polysiloxane block | SABIC's Innovative Plastics business |
| MR-01 | Silicon based core-shell graft copolymer | MR-01 from Kaneka |
| MBS | Copolymer of methyl methacrylate, butadiene, and styrene | PARALOID™ EXL 2650A from Dow Chemical. |
| TPPO | Triphenylphosphine oxide | Shanghai Changgen Chemical Technology Co., Ltd. |
| BPADP | BPA Diphosphate | Daihachi Co. Ltd CR741 |
| TSAN | Polytetrafluoroethylene, 50 wt%, encapsulated in poly(styrene-co-acrylonitrile) | SABIC's Innovative Plastics business |
| AO1 | Tris(2,4-ditert-butylphenyl) phosphite | Ciba IRGAFOS™ 168 |
| AO2 | Octadecyl 3-(3,5-di-tert-butyl-4-hydroxyphenyl)propionate | Ciba IRGANOX™ 1076 |
| PETS | Pentaerythritol tetrastearate | FACI ASIA PACIFIC PTE LTD. |

### EXAMPLES

The components as listed in Table 1 are used in the examples. Unless specifically indicated otherwise, the amount of each component is in weight percent in the following examples, based on the total weight of the composition.

All components, except where indicated, were pre-blended and then kneaded and extruded using a Toshiba SE37 mm twin-screw extruder (Length/Diameter (L/D) ratio = 40/1, vacuum port located near die face). The extrudate was subsequently cooled through a water bath and then pelletized. The pellets were dried at 100°C for four hours. Typical extruding parameters are shown in Table 2, where rpm is revolutions per minute and kg/hr is kilograms per hour.

All samples that were tested in accordance with ASTM standards were prepared from pellets using a 150 T injection molding machine at a melt temperature of 250°C and a mold temperature of 80°C, though it will be recognized by one skilled in the art that the method cannot be limited to these temperatures. Molding parameters used are shown in Table 3, where kgf/cm² is kilograms force per centimeter squared.

Physical measurements were made using the tests and test methods described above.

| Table 2 | | |
|---|---|---|
| Parameter | Unit | Value |
| Die | mm | 3 |
| Zone 1 Temperature | °C | 100 |
| Zone 2 Temperature | °C | 200 |
| Zone 3 Temperature | °C | 255 |
| Zone 4 Temperature | °C | 255 |
| Zone 5 Temperature | °C | 255 |
| Zone 6 Temperature | °C | 265 |
| Zone 7 Temperature | °C | 265 |
| Zone 8 Temperature | °C | 265 |
| Zone 9 Temperature | °C | 265 |
| Die Temperature | °C | 260 |
| Screw speed | rpm | 350 |
| Throughput | kg/hr | 60 |

| Table 3 | | |
|---|---|---|
| Parameter | Unit | Value |
| Pre-drying time | Hour | 4 |
| Pre-drying Temperature | °C | 100 |
| Hopper Temperature | °C | 50 |
| Zone 1 Temperature | °C | 250 |
| Zone 2 Temperature | °C | 250 |
| Zone 3 Temperature | °C | 250 |
| Nozzle Temperature | °C | 250 |
| Mold Temperature | °C | 80 |
| Screw speed | rpm | 80 |
| Back pressure | kgf/cm² | 80 |

### Examples 1-10

Examples E1 to E10 were prepared in accordance with Table 4 and the respective properties shown. Temp. refers to temperature.

As demonstrated in Examples E1 and E3, the combination of oxide phosphine FR additive (TPPO) and EXL can result in a UL94 V0 rating at a thickness of 0.6 mm or thinner and an impact strength (NII) of greater than 500 J/m at a temperature of 23°C while maintaining satisfactory material flow-ability. As is demonstrated in Example E2, replacement of the phosphine additive of Example E1 with a phosphate FR additive (BPADP) results in a lower MFR value, reduced impact strength, and reduced FR performance. As is demonstrated in Examples E4 and E10, compositions without EXL had poor flame retardant and impact properties.

| Table 4 | | | | | | | | | | |
|---|---|---|---|---|---|---|---|---|---|---|
| Component | E1 | E2 | E3 | E4 | E5 | E6 | E7 | E8 | E9 | E10 |
| LF PC | 24.6 | 24.6 | 21.6 | 39.6 | 34.6 | 21.6 | 19.6 | 21.6 | 21.6 | 26.6 |
| HF PC | 50.54 | 50.54 | 50.54 | 50.54 | 50.54 | 49.04 | 49.04 | 49.04 | 49.04 | 59.04 |
| EXL | 18 | 18 | 18 | | | 18 | 16 | 18 | 18 | |
| MBS | | | | | 5 | 1 | 3 | | 1 | 4 |
| MR-01 | | | | | | | | 1 | | |
| TPPO | 6 | | 9 | 9 | 9 | 9.5 | 11.5 | 9.5 | | 9.5 |
| BPADP | | 6 | | | | | | | 9.5 | |
| TSAN | 0.4 | 0.4 | 0.4 | 0.4 | 0.4 | 0.4 | 0.4 | 0.4 | 0.4 | 0.4 |
| AO1 | 0.08 | 0.08 | 0.08 | 0.08 | 0.08 | 0.08 | 0.08 | 0.08 | 0.08 | 0.08 |
| AO2 | 0.08 | 0.08 | 0.08 | 0.08 | 0.08 | 0.08 | 0.08 | 0.08 | 0.08 | 0.08 |
| PETS | 0.3 | 0.3 | 0.3 | 0.3 | 0.3 | 0.3 | 0.3 | 0.3 | 0.3 | 0.3 |

| **Properties** | | | | | | | | | | |
|---|---|---|---|---|---|---|---|---|---|---|
| MFR at 260°C, 2.16kg, g/10min | 10 | 8 | 18 | 18 | 12 | 17 | 17 | 17 | 16 | 16 |
| NII at 23°C (J/m) | 863 | 804 | 845 | 54 | 801 | 899 | 860 | 870 | 674 | 625 |
| NII at 0°C (J/m) | 713 | 680 | 110 | 50 | 625 | 723 | 746 | 746 | 263 | 217 |
| Vicat Softening Temp. (°C) | 120 | 121 | 113 | 113 | 113 | 114 | 104 | 114 | 111 | 113 |
| UL94 rating at 0.6 mm | V0 | V0 | V0 | V2 | N.R. | V0 | V0 | V0 | V1 | V2 |
| UL94 rating at 0.5 mm | V2 | N.R. | V0 | V2 | N.R. | V0 | V0 | V0 | N.R. | N.R. |

| | | | | | | | | | | |
|---|---|---|---|---|---|---|---|---|---|---|
| N.R. stands for no rating, where the sample showed very low flame performance and could not achieve a UL94 standard | | | | | | | | | | |

Example E3 shows that the composition has good flame retardancy, even at 0.5 mm and good impact strength at 23°C. Examples E6, E7, and E8 in Table 5 depict compositions having an excellent thin wall FR rating (V0 at a thickness of 0.5 mm), excellent impact strength (even at 0°C), and good flow-ability. Such compositions can be suitable for battery housing or other applicants with stringent criteria.

Set forth below are some embodiments of the present composition, the method of making, and of using the same. temperature of 100 to 120°C measured in accordance with ASTM 1525-09.

As used herein, the term "hydrocarbyl" and "hydrocarbon" refers broadly to a substituent comprising carbon and hydrogen, optionally with 1 to 3 heteroatoms, for example, oxygen, nitrogen, silicon, sulfur, or a combination thereof; "alkyl" refers to a straight or branched chain, saturated monovalent hydrocarbon group; "alkylene" refers to a straight or branched chain, saturated, divalent hydrocarbon group; "alkylidene" refers to a straight or branched chain, saturated divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicylic hydrocarbon group having at least three carbon atoms, "cycloalkenyl" refers to a non-aromatic cyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound. Exemplary groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkage and 2 to 8, or 2 to 6 carbon atoms); C₁₋₆ or C₁₋₃ alkoxys; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic ring (e.g., phenyl, biphenyl, naphthyl, or the like, each ring either substituted or unsubstituted aromatic); C₇₋₁₉ arylalkyl having 1 to 3 separate or fused rings and 6 to 18 ring carbon atoms; or arylalkoxy having 1 to 3 separate or fused rings and 6 to 18 ring carbon atoms, with benzyloxy being an exemplary arylalkoxy.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or." The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs. Unless otherwise stated, test standards are the most recent as of September 1, 2015. The modifier "about" used in connection with a quantity is inclusive of the stated value and has the meaning dictated by the context (e.g., includes the degree of error associated with measurement of the particular quantity). Disclosure of a narrower range or more specific group in addition to a broader range is not a disclaimer of the broader range or larger group.

## Claims

1. A composition comprising, based on the total weight of the composition,
55 to 85 wt% of a polycarbonate;
10 to 25 wt% of an organopolysiloxane-polycarbonate block copolymer;
5 to 15 wt% of a phosphine oxide; and
0 to 3 wt % of an impact modifier.

2. The composition of Claim 1, wherein the phosphine oxide comprises triphenylphosphine oxide.

3. The composition of any of the preceding claims, wherein the organopolysiloxane-polycarbonate block copolymer comprises a poly(bisphenol A carbonate)-polydimethylsiloxane block copolymer.

4. The composition of Claim 3, wherein the poly(bisphenol A carbonate)-polydimethylsiloxane block copolymer has a polydimethylsiloxane content of 15 to 20 wt% based on the total weight of the copolymer.

5. The composition of any of the preceding claims, wherein the composition has a UL94 V0 rating when measured at a thickness of 0.6 mm or lower, preferably at 0.5 mm.

6. The composition of any of the preceding claims, wherein the composition has a Notched Izod impact strength as determined at a temperature of 23°C, in accordance with ASTM D256-10, of greater than or equal to 500 J/m, preferably of greater than or equal to 500 to 1,000 J/m, at a thickness of 3.2 mm.

7. The composition of any of the preceding claims, wherein the composition has a melt flow rate as determined at 260°C using a 2.16 kg weight, in accordance with ASTM D1238-13 of greater than or equal to 10 grams per 10 minutes.

8. The composition of any of the preceding claims, wherein
the polycarbonate comprises a polycarbonate derived from bisphenol A;
the organopolysiloxane-polycarbonate block copolymer comprises a poly(bisphenol A carbonate)-polydimethylsiloxane block copolymer having a polydimethylsiloxane content of 20 wt% and an average of 45 siloxane repeat units per polysiloxane block; and
the phosphine oxide comprises triphenylphosphine oxide.

9. The composition of any of the preceding claims, wherein the composition is halogen-free.

10. The composition of any of the preceding claims, **characterized by** one of more of the following : the phosphine oxide is present in an amount of greater than 9 to 15 wt%, the polycarbonate is present in an amount of 65 to 80 wt%, the organopolysiloxane-polycarbonate block copolymer is present in an amount of 15 to 20 wt%, and the impact modifier is present in an amount of 0.05 to 3 wt%.

11. The composition of any of the preceding claims, wherein the polycarbonate comprises at least a first polycarbonate and a second polycarbonate, wherein the first polycarbonate has a first melt flow rate of less than 15 g/10 min; and wherein the second polycarbonate has a second melt flow rate of greater than or equal to 15 g/10 min; wherein the first melt flow rate and the second melt flow rate are determined in accordance with ASTM D1238-13 at 300°C and a 1.2 kg load.

12. The composition of any one of claims 1 or 3-11 wherein the phosphine oxide has the formula 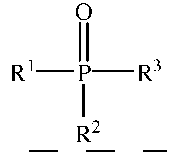 wherein R¹, R², and R³ are each independently C₄-C₂₄ hydrocarbyl

13. An article comprising the composition of any of the preceding claims.

14. An article according to claim 13 which is able to achieve a UL94 V0 rating at 0.5 mm.

15. A method of making the composition according to any of Claims 1-12 comprising:
extruding the polycarbonate, the organopolysiloxane-polycarbonate block copolymer, and the phosphine oxide to form the composition.

## Patentansprüche

1. Eine Zusammensetzung, die, basierend auf dem Gesamtgewicht der Zusammensetzung, Folgendes umfasst:
55 bis 85 Gewichtsprozent eines Polycarbonats;
10 bis 25 Gewichtsprozent eines Organopolysiloxan-Polycarbonat-Blockcopolymers;
5 bis 15 Gewichtsprozent eines Phosphinoxids und
0 bis 3 Gewichtsprozent eines Elastifikators.

2. Die Zusammensetzung gemäß Anspruch 1, worin das Phosphinoxid Triphenylphosphinoxid umfasst.

3. Die Zusammensetzung gemäß einem beliebigen der obigen Ansprüche, worin das Organopolysiloxan-Polycarbonat-Blockcopolymer ein Poly(bisphenol A-carbonat)-Polydimethylsiloxan-Blockcopolymer umfasst.

4. Die Zusammensetzung gemäß Anspruch 3, worin das Poly(bisphenol A-carbonat)-Polydimethylsiloxan-Blockcopolymer einen Polydimethylsiloxangehalt von 15 bis 20 Gewichtsprozent, basierend auf dem Gesamtgewicht des Copolymers, hat.

5. Die Zusammensetzung gemäß einem beliebigen der obigen Ansprüche, wobei die Zusammensetzung einen UL94 V0-Wert hat, gemessen bei einer Dicke von höchstens 0,6 mm, vorzugsweise 0,5 mm.

6. Die Zusammensetzung gemäß einem beliebigen der obigen Ansprüche, wobei die Zusammensetzung eine Izod-Kerbschlagzähigkeit, bestimmt bei einer Temperatur von 23°C gemäß ASTM D256-10, von mindestens 500 J/m, vorzugsweise mindestens 500 bis 1.000 J/m, bei einer Dicke von 3,2 mm hat.

7. Die Zusammensetzung gemäß einem beliebigen der obigen Ansprüche, wobei die Zusammensetzung eine Schmelzflussrate, bestimmt bei 260°C unter Verwendung eines Gewichts von 2,16kg gemäß ASTM D1238-13, von mindestens 10 Gramm pro 10 Minuten hat.

8. Die Zusammensetzung gemäß einem beliebigen der obigen Ansprüche, worin
das Polycarbonat ein von Bisphenol A abgeleitetes Polycarbonat umfasst;
das Organopolysiloxan-Polycarbonat-Blockcopolymer ein Poly(bisphenol A-carbonat)-Polydimethylsiloxan-Blockcopolymer mit einem Polydimethylsiloxangehalt von 20 Gewichtsprozent und durchschnittlich 45 Siloxan-Wiederholungseinheiten pro Polysiloxanblock umfasst; und
das Phosphinoxid Triphenylphosphinoxid umfasst.

9. Die Zusammensetzung gemäß einem beliebigen der obigen Ansprüche, wobei die Zusammensetzung halogenfrei ist.

10. Die Zusammensetzung gemäß einem beliebigen der obigen Ansprüche, **gekennzeichnet durch** eines oder mehrere von Folgendem: Das Phosphinoxid ist anwesend in einer Menge von mehr als 9 bis 15 Gewichtsprozent, das Polycarbonat ist anwesend in einer Menge von 65 bis 80 Gewichtsprozent, das Organopolysiloxan-Polycarbonat-Blockcopolymer ist anwesend in einer Menge von 15 bis 20 Gewichtsprozent, und der Elastifikator ist anwesend in einer Menge von 0,05 bis 3 Gewichtsprozent.

11. Die Zusammensetzung gemäß einem beliebigen der obigen Ansprüche, wobei das Polycarbonat mindestens ein erstes und ein zweites Polycarbonat umfasst, wobei das erste Polycarbonat eine erste Schmelzflussrate von weniger als 15 g/10 min hat und wobei das zweite Polycarbonat eine zweite Schmelzflussrate von mindestens 15 g/10 min hat; wobei die erste Schmelzflussrate und die zweite Schmelzflussrate gemäß ASTM D1238-13 bei 300°C und einer Belastung von 1,2 kg bestimmt werden.

12. Die Zusammensetzung gemäß einem beliebigen der Ansprüche 1 oder 3-11, worin das Phosphinoxid folgende Formel hat: 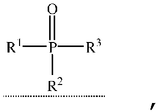 worin R¹, R² und R³ jeweils unabhängig C₄-C₂₄-Hydrocarbyl sind.

13. Ein Gegenstand, der die Zusammensetzung gemäß einem beliebigen der obigen Ansprüche umfasst.

14. Ein Gegenstand gemäß Anspruch 13, der in der Lage ist, einen UL94 V0-Wert bei 0,5 mm zu erreichen.

15. Ein Verfahren zur Herstellung der Zusammensetzung gemäß einem beliebigen der Ansprüche 1-12, das Folgendes umfasst:
das Extrudieren des Polycarbonats, des Organopolysiloxan-Polycarbonat-Blockcopolymers und des Phosphinoxids, um die Zusammensetzung zu bilden.

## Revendications

1. Composition comprenant, sur la base du poids total de la composition,
de 55 à 85 % en poids d'un polycarbonate ;
de 10 à 25 % en poids d'un copolymère séquencé d'organopolysiloxane-polycarbonate ;
de 5 à 15 % en poids d'un oxyde de phosphine ; et
de 0 à 3 % en poids d'un modificateur d'impact.

2. Composition selon la revendication 1, dans laquelle l'oxyde de phosphine comprend l'oxyde de triphénylphosphine.

3. Composition selon l'une quelconque des revendications précédentes, dans laquelle le copolymère séquencé d'organopolysiloxane-polycarbonate comprend un copolymère séquencé de poly(carbonate de bisphénol A)-polydiméthylsiloxane.

4. Composition selon la revendication 3, dans laquelle le copolymère séquencé de poly(carbonate de bisphénol A)-polydiméthylsiloxane a une teneur en polydiméthylsiloxane de 15 à 20 % en poids sur la base du poids total du copolymère.

5. Composition selon l'une quelconque des revendications précédentes, dans laquelle la composition a une classification UL94 V0 lorsqu'elle est mesurée à une épaisseur de 0,6 mm ou moins, de préférence à 0,5 mm.

6. Composition selon l'une quelconque des revendications précédentes, dans laquelle la composition a une résistance au choc izod sur barreau entaillé telle que déterminée à une température de 23 °C, conformément à la norme ASTM D256-10, supérieure ou égale à 500 J/m, de préférence supérieure ou égale à 500 à 1 000 J/m, à une épaisseur de 3,2 mm.

7. Composition selon l'une quelconque des revendications précédentes, dans laquelle la composition a un indice de fusion tel que déterminé à 260 °C en utilisant un poids de 2,16 kg, conformément à la norme ASTM D1238-13 supérieure ou égale à 10 grammes par 10 minutes.

8. Composition selon l'une quelconque des revendications précédentes, dans laquelle
le polycarbonate comprend un polycarbonate dérivé du bisphénol A ;
le copolymère séquencé d'organopolysiloxane-polycarbonate comprend un copolymère séquencé de poly(carbonate de bisphénol A)-polydiméthylsiloxane ayant une teneur en polydiméthylsiloxane de 20 % en poids et une moyenne de 45 motifs répétés de siloxane par séquence de polysiloxane ; et
l'oxyde de phosphine comprend l'oxyde de triphénylphosphine.

9. Composition selon l'une quelconque des revendications précédentes, dans laquelle la composition est exempte d'halogène.

10. Composition selon l'une quelconque des revendications précédentes, **caractérisée par** un ou plusieurs de ce qui suit : l'oxyde de phosphine est présent en une quantité supérieure à 9 à 15 % en poids, le polycarbonate est présent en une quantité de 65 à 80 % en poids, le copolymère séquencé d'organopolysiloxane-polycarbonate est présent en une quantité de 15 à 20 % en poids, et le modificateur d'impact est présent en une quantité de 0,05 à 3 % en poids.

11. Composition selon l'une quelconque des revendications précédentes, dans laquelle le polycarbonate comprend au moins un premier polycarbonate et un second polycarbonate, dans laquelle le premier polycarbonate a un premier indice de fusion inférieur à 15 g/10 min ; et dans laquelle le second polycarbonate a un second indice de fusion supérieur ou égal à 15 g/10 min ; dans laquelle le premier indice de fusion et le second indice de fusion sont déterminés conformément à la norme ASTM D1238-13 à 300 °C et une charge de 1,2 kg.

12. Composition selon l'une quelconque des revendications 1 ou 3 à 11, dans laquelle l'oxyde de phosphine a la formule 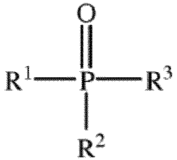 dans laquelle R¹, R² et R³ sont chacun indépendamment un groupe hydrocarbyle en C₄ à C₂₄.

13. Article comprenant la composition selon l'une quelconque des revendications précédentes.

14. Article selon la revendication 13 qui est capable d'obtenir une classification UL94 V0 à 0,5 mm.

15. Procédé de préparation de la composition selon l'une quelconque des revendications 1 à 12 comprenant :
l'extrusion du polycarbonate, du copolymère séquencé d'organopolysiloxane-polycarbonate et de l'oxyde de phosphine pour former la composition.
